# EUROPÄISCHE PATENTSCHRIFT

(11) **EP 2 728 920 B1**
(45) Veröffentlichungstag und Bekanntmachung des Hinweises auf die Patenterteilung: **19.12.2018**
(21) Anmeldenummer: 13191621.5
(22) Anmeldetag: 05.11.2013
(51) Int. Cl.: H04W 12/12, G08G 3/02, H04B 7/26, H04W 12/10, H04L 29/08

(54) **AIS-Schiffstransceiver erkennt eine gefälschte Basisstation**
AIS marine transceiver detects a rogue base station
Émetteur-récepteur de bateau AIS détecte un station de base fausse

(30) Priorität: 05.11.2012 DE 102012110541
(43) Veröffentlichungstag der Anmeldung: 07.05.2014
(73) Patentinhaber: Deutsches Zentrum für Luft- und Raumfahrt e.V., 51147 Köln (DE)
(72) Erfinder: Behrens, Jörg, 28355 Bremen (DE); Dembovskis, Andis, 28359 Bremen (DE)
(74) Vertreter: Aisch, Sebastian

(56) Entgegenhaltungen:
- EP-A1- 2 003 818
- "Technical characteristics for an automatic identification system using time-division multiple access in the VHF maritime mobile band - M Series - Mobile, radiodetermination, amateur and related satellite services; Recommendation ITU-R M.1371-4", ITU-R RECCOMENDATIONS, 1. April 2010 (2010-04-01), XP055102464,

## Beschreibung

Die Erfindung betrifft einen AIS-Schiffstransceiver, der zum Einbau auf einem Schiff vorgesehen ist, um AIS-Funksignale senden und empfangen zu können, mit einer AIS-Funksendeeinheit, die zum Senden von AIS-Funksignalen ausgebildet ist, und mit einer AIS-Funkempfangseinheit, die zum Empfang von AIS-Funksignalen, die von benachbarten Schiffen und/oder in Reichweite befindlichen AIS-Bodenstationen ausgesendet wurden, ausgebildet ist, wobei der AIS-Schiffstransceiver eingerichtet ist, nach Empfang einer von einer AIS-Bodenstation ausgesendeten AIS-Bodenstations-Nachricht in Abhängigkeit von der empfangenen AIS-Bodenstations-Nachricht das Aussenden zumindest eines Teils der AIS-Funksignale durch die AIS-Funksendeeinheit zu deaktivieren und/oder zu aktivieren.

Die Erfindung betrifft ebenso ein Verfahren zum Senden und Empfangen von AIS-Funksignalen durch einen solchen AIS-Schiffstransceiver hierzu.

Die Überwachung des weltweit zunehmenden Schiffsverkehrs basiert heute überwiegend auf Radarüberwachung, Sprechfunk, sowie der Nutzung von AIS (Automatic Identification System). Seit dem Jahr 2000 ist das AIS von der Internationalen Schifffahrtsorganisation (IMO) als verbindlicher Standard festgelegt worden, um die Sicherheit des internationalen Schiffsverkehrs zu erhöhen. Dieses lokal begrenzte Funksystem dient zum Austausch von Navigations- und anderen Schiffsdaten, die es den Schiffen ermöglichen sollen, einen umfassenden Überblick über den benachbarten Schiffverkehr zu erhalten. Primäres Ziel ist dabei, Kollision zwischen Schiffen zu vermeiden.

Mit Hilfe eines auf den Schiffen angeordneten AIS-Schiffstransceiver werden abwechselnd auf zwei Kanälen im UKW-Seefunkbereich, nämlich zum einen auf 161,975 MHz und zum anderen auf 162,025 MHz, AIS-Funksignale, welche die entsprechenden Schiffsdaten, wie beispielsweise Navigationsdaten, im Broadcastverfahren aussendet. Das Aussenden der einzelnen AIS-Funksignale erfolgt dabei in festen Zeitspalten deren Belegung selbstständig durch die betreffenden Teilnehmer einer AIS-Funkzelle abgestimmt wird, so genanntes (SOTDMA Self Organising Time Division Multiple Access). Somit stehen pro Minute lediglich 2.250 Zeitschlitze zur Übertragung von Daten den einzelnen Teilnehmern zur Verfügung.

Mit Hilfe des an Bord verbauten AIS-Schiffstransceiver können die von den anderen Schiffen ausgesendeten Funksignale empfangen werden, wobei die in den AIS-Funksignalen enthaltenen Schiffsdaten dann extrahiert werden können. Durch den Empfang von den Schiffsdaten verschiedener Schiffe in der Umgebung eines Schiffes lässt sich somit ein Überblick über den benachbarten Schiffsverkehr bzw. der benachbarten Schiffe ableiten, so dass ein Schiff beispielsweise feststellen kann, in welche Richtung und mit welcher Geschwindigkeit benachbarte Schiffe, die beispielsweise aufgrund schlechter Sichtverhältnisse nicht direkt sichtbar sind, fahren. Somit lassen sich Kollisionen vermeiden und ein wesentlich verbessertes, wenn auch lokal begrenztes Lagebild erzeugen.

Aufgrund des verwendeten UKW-Frequenzbandes entspricht die Funkreichweite von AIS von Schiff zu Schiff ca. 40 bis 60 km, was ein wenig mehr als der normalen Sichtweite auf Hoher See entspricht. Küstenstationen können durch ihre höhere Position einen Umkreis von bis zu 100 km abdecken. Aufgrund der beschränkten Reichweite sowie des verwendeten SOTDMA-Übertragungsprotokolls bilden Schiffe, die sich gegenseitig sehen und empfangen können, eine AIS-Funkzelle innerhalb derer die Teilnehmer kollisionsfrei senden und empfangen können.

Damit stellt das AIS lediglich ein lokales Funksystem dar, das zwar für ein auf Hoher See befindliches Schiff ausreichend Zeitschlitzenkapazität zur Verfügung stellt, jedoch für eine weltweite, insbesondere satellitenbasierte Erhebung des Schiffsverkehrs nicht geeignet ist, da die Abdeckung eines Satelliten viele einzelne AIS-Funkzellen umfasst. Für Reedereien, die Schifffahrtsorganisationen oder Umweltministerien wäre jedoch eine zeitnahe Erhebung der weltweit anfallenden AIS-Schiffverkehrsdaten von großem Interesse, um insbesondere auch illegalen Machenschaften auf Hoher See entgegenzuwirken.

So ist beispielsweise aus der nachveröffentlichten DE 10 2011 113 152 A1 ein globales Schiffsüberwachungssystem bekannt, mit dem Schiffe eines Schiffverkehrs auf Hoher See zentral überwacht werden können. Hierzu weisen Verkehrsflugzeuge AIS-Empfangseinheiten auf, die auf ihrer Flugroute die von den Schiffen ausgesendeten AIS-Funksignale empfangen und zur weiteren Bearbeitung an eine Bodenstation übertragen. Hierdurch lässt sich insbesondere auf vielbefahrenen Routen eine nahezu lückenlose Abdeckung und Überwachung erreichen.

In jüngster Vergangenheit wurden Versuche unternommen, AIS-Empfangsantennen auf Satelliten anzuordnen, um so die weltweit ausgesendeten AIS-Funksignale mit Hilfe eines Satellitensystems empfangen zu können. So ist beispielsweise aus der US 2008/0086267 A1 ein satellitenbasiertes System bekannt, bei dem an den Satelliten eine AIS-Empfangseinheit angeordnet ist, um die von den Schiffen ausgesendeten AIS-Funksignale empfangen zu können. Die in den AIS-Funksignalen enthaltenen AIS-Informationen werden an eine Zentrale weitergeleitet, um so ein globales Monitoring des Schiffverkehrs zu erhalten. Mit einem solchen Satellitensystem kann somit auch in entlegenen Regionen eine lückenlose Überwachung erreicht werden. Insbesondere die westlichen Industrienationen fordern im Zuge ihrer Terrorbekämpfung die Einführung der Kontrolle des Seeverkehrs aus dem All. Allerdings haben derartige satellitenbasierte Überwachungssysteme im Hinblick auf die AIS-Funksignale in hoch frequentierten Seegebieten den erheblichen Nachteil, dass die Detektion von Schiffen nicht mehr hinreichend genau realisiert werden kann. Aufgrund der extremen Flughöhe eines Satelliten wird ein Empfangsbereich mit einem Durchmesser von ca. 5.000 bis 6.000 km abgedeckt. Da sich das AIS als lokales Funksystem selbstständig in einzelne Funkzellen organisiert, die alle auf dem gleichen Frequenzband senden, kommt es bei einem derart großen Empfangsradius jedoch zum Empfang einer Vielzahl von Funkzellen mit identischen Sendefrequenz und Zeitschlitzen, so dass sich AIS-Funksignale verschiedener AIS-Funkzellen überlagern und eine normale Datenverarbeitung nicht mehr möglich ist. Gerade auf hoch frequentierten Schifffahrtsrouten oder in Hafen- und Küstennähe wird durch den Empfangsbereich des Satelliten eine derart große Anzahl von Schiffen abgedeckt, dass eine hinreichend sichere Überwachung aufgrund der Signalkollisionen nicht mehr möglich ist.

Um diesem Problem zu begegnen, werden zukünftig neben den bereits existierenden AIS-Frequenzen (AIS1:161,975 MHz; AIS2:162,025 MHz) zwei zusätzliche UKW-Kanäle für eine satellitengestützte Überwachung mit Hilfe von AIS-Funksignalen zur Verfügung gestellt. Hierzu sollen für die Kommunikation speziell die Kanäle auf 156,775 MHz (AIS3) und 156,875 (AIS4) für den Empfang von AIS-Funksignalen aus dem Weltraum per Satellit zugeordnet werden. Hintergrund der Einführung der zusätzlichen Satelliten-AIS (SAT-AIS) Frequenzen ist es, ein möglichst vollständiges maritimes Lagebild mit Hilfe von SAT-AIS auf Hoher See entfernt von den Küstenregionen zu erhalten. Dies ist derzeit allein mit AIS1 und AIS2 aus den oben genannten Gründen (Interferenzen) nicht möglich.

Nach der Definition der ITU (ITU-R-M-1371-4) werden AIS3 und AIS4 Funksignale schiffsseitig automatisch ausgeschaltet, wenn sich die Schiffe in dem Kommunikationsbereich von sogenannten AIS-Bodenstationen (AIS-Base-Stations) befinden, die in der Regel an der Küste installiert sind. Empfängt ein Schiff einen von einer AIS-Bodenstation ausgesendeten "Base Station Report" (Message 4) mit der Aufforderung, SAT-AIS abzuschalten (Control-bit für "Transmission control for longrange broadcast message"), so deaktiviert der auf dem Schiff installierte AIS-Schiffstransceiver das Aussenden der AIS3/AIS4-Funksignale für die satellitengestützte Überwachung. Dadurch soll erreicht werden, dass in Küstenregionen, die in der Regel aufgrund der Konzentration des Schiffsverkehrs stark befahren sind, keine AIS3/AIS4-Funksignale ausgesendet werden sollen, um den Satellitenempfang aufgrund einer Vielzahl von Funksignale, die sich gegenseitig überlagern können, nicht zu stören. Die Überwachung erfolgt dann über die AIS-Bodenstationen. Befindet sich das Schiff außerhalb des Kommunikationsbereiches einer AIS-Bodenstation so wird schiffsseitig das Aussenden der AIS3/AIS4-Funksignale für die satellitengestützte Überwachung automatisch wieder eingeschaltet.

Allerdings weist die automatische Abschaltfunktion den Nachteil auf, dass diese Funktionalität missbräuchlich verwendet werden kann. So ist es beispielsweise denkbar, dass Piraten oder andere terroristische Organisationen mittels einer gefälschten AIS-Bodenstations-Nachricht das Ausschalten des AIS-Schiffstransceivers forcieren, obwohl sich das Schiff nicht in Reichweite einer AIS-Bodenstation befindet. Dies würde im schlimmsten Fall dazu führen, dass das Schiff keine AIS-Funksignale für die satellitengestützte Überwachung aussendet und somit das Schiff nicht mehr überwacht und geortet werden kann. Denkbar ist allerdings auch, dass durch Fälschen einer solchen AIS-Bodenstations-Nachricht die Besatzung eines Schiffes selber den AIS-Schiffstransceiver für die satellitengestützte Überwachung ausschaltet und so beispielsweise illegale Aktivitäten durchzuführen oder sich dem Zugriff von Sicherheitsbehörden zu entziehen.

Aus der EP 2 003 818 A1 ist ein Verfahrne zum Detektieren gefälschter bzw. böswilliger Basisstationen in GSM-Funknetzen bekannt. Hierbei werden die von einer Basistation stammenden Daten verifiziert, wobei bei Feststellung einer gefälschten bzw. böswilligen Basisstation dann ein Alarm ausgegeben wird.

Es ist daher Aufgabe der vorliegenden Erfindung einen verbesserten AIS-Schiffstransceiver anzugeben, der gegenüber Manipulationsversuchen hinsichtlich der automatischen Abschaltfunktion sicher ist.

Die Aufgabe wird mit dem AIS-Schiffstransceiver der eingangs genannten Art erfindungsgemäß dadurch gelöst, dass der AIS-Schiffstransceiver eine Steuereinheit aufweist, die mit einer Datenbank verbunden ist, in der Daten bezüglich gültiger AIS-Bodenstationen hinterlegt sind, wobei die Steuereinheit eingerichtet ist,
- nach Empfang der AIS-Bodenstations-Nachricht die sendende AIS-Bodenstation in Abhängigkeit von dem in der AIS-Bodenstations-Nachricht enthaltenen Daten und den in der Datenbank zu dieser AIS-Bodenstation hinterlegten Daten zu validieren und
- das Aussenden des zumindest einen Teils der AIS-Funksignale in Abhängigkeit von der Validierung der sendenden AIS-Bodenstation zu deaktivieren und/oder zu aktivieren.

Demnach wird erfindungsgemäß vorgeschlagen, dass der AIS-Schiffstransceiver eine Steuereinheit aufweist, welche mit einer Datenbank verbunden ist. In der Datenbank befinden sich Informationen bzw. Daten bezüglich gültiger AIS-Bodenstationen. Derartige Daten können beispielsweise die Position, die ID oder andere statistische Daten der Bodenstationen sein.

Empfängt der AIS-Schiffstransceiver nunmehr eine solche AIS-Bodenstations-Nachricht, so wird die sendende AIS-Bodenstation in Abhängigkeit von den in der Nachricht enthaltenen Daten und den in der Datenbank zu dieser AIS-Bodenstation hinterlegten Daten validiert. Eine solche Validierung kann beispielsweise durch einen einfachen Vergleich der relevanten Daten erfolgen. Denkbar ist auch, dass zur Validierung eine Plausibilitätsprüfung durchgeführt wird, beispielsweise derart, ob eine Bodenstation mit einer solchen Identifikation in diesen Gewässern überhaupt aufzufinden ist.

Anhand dieser Validierung der AIS-Bodenstation kann festgestellt werden, ob die ausgesendete AIS-Bodenstations-Nachricht von einer gültigen AIS-Bodenstation ausgesendet wurde oder ob es sich bei dieser Nachricht um einen Missbrauchsversuch handelt. Je nach Validierungsergebnis steuert dann die Steuereinheit die Deaktivierung und/oder Aktivierung des Aussendens des zumindest einen Teils der AIS-Funksignale entsprechend, so dass beispielsweise bei fehlgeschlagener Validierung (Missbrauchsversuch) das Aussenden des zumindest einen Teils der AIS-Funksignale nicht deaktiviert wird.

Die Datenbank kann dabei Bestandteil des AIS-Schiffstransceivers sein. Die Datenbank kann aber auch über einen Remotezugriff abgefragt werden, wenn die Daten nur zentral zur Verfügung gestellt werden.

So kann der AIS-Schiffstransceiver mit seiner AIS-Funkempfangseinheit eingerichtet sein, eine Base-Station-Report-Nachricht (Message 4) als AIS-Bodenstations-Nachricht empfangen zu können, die in der Regel von einer AIS-Bodenstation ausgesendet wird. Eine solche Base-Station-Report-Nachricht (Message 4) enthält in der Regel einen Bit (Transmission control for longrange broadcast message), mit dem das Aktivieren und/oder Deaktivieren des Aussendens der entsprechenden AIS-Funksignale angezeigt werden soll. Eine solche Base-Station-Report-Nachricht wird dabei in der Regel von einer AIS-Bodenstation im Broadcast-Verfahren ausgesendet. Empfängt ein AIS-Schiffstransceiver diese Nachricht, so ermittelt er den Bit-Status des oben genannten Bits und schaltet dann in Abhängigkeit des Bit-Status das Senden der entsprechenden AIS-Funksignale an oder aus.

Erfindungsgemäß wird nunmehr vorgeschlagen, dass zusätzlich zu dem automatischen Abschalten vorher die Gültigkeit der AIS-Bodenstation validiert wird und dass Deaktivieren und/oder Aktivieren des Aussendens der entsprechenden AIS-Funksignale sowohl anhand des Bit-Status als auch anhand des Validierungsergebnisses durchgeführt wird.

Erfindungsgemäß kann die AIS-Funksendeeinheit eingerichtet sein, AIS-Funksignale (AIS1/AIS2) eines ersten AIS-Funksignaltyps (TER-AIS) und AIS-Funksignale (AIS3/AIS4) eines zweiten AIS-Funksignaltyps (SAT-AIS) aussenden, wobei die AIS-Funkempfangseinheit zum Empfang der AIS-Funksignale des ersten AIS-Funksignaltyps ausgebildet ist. Wird nun eine AIS-Bodenstations-Nachricht empfangen, so wird in Abhängigkeit von der empfangenen AIS-Bodenstations-Nachricht und der Validierung der AIS-Bodenstation das Aussenden der AIS-Funksignale des zweiten AIS-Funksignaltyps aktiviert und/oder deaktiviert.

So ist es beispielsweise denkbar, dass bei einer fehlgeschlagenen Validierung der sendenden AIS-Bodenstation eine in der AIS-Bodenstations-Nachricht angezeigte Deaktivierung oder Aktivierung der betreffenden AIS-Funksignale von der Steuereinheit nicht zugelassen wird, so dass das Aussenden der betreffenden AIS-Funksignale nicht deaktiviert oder nicht aktiviert wird. Hierdurch kann verhindert werden, dass bei Missbrauch der AIS-Bodenstations-Nachricht dieser erkannt und nicht zu einem Abschalten des AIS-Schiffstransceivers führt.

Denkbar ist aber auch, dass bei einer erfolgreichen Validierung die angezeigte Deaktivierung und/oder Aktivierung von der Steuereinheit zugelassen wird. So kann verhindert werden, dass in dicht befahrenen Gebieten die Satellitenüberwachung aufgrund von überlagerten AIS-Funksignalen nicht zum Erliegen kommt, da die satellitengestützte Überwachung abgeschaltet und die Überwachung dann über die entsprechende in Reichweite befindliche Bodenstation durchgeführt wird.

Denkbar ist allerdings auch, dass bei fehlgeschlagener Validierung der sendenden AIS-Bodenstation das Aussenden der jeweiligen AIS-Funksignale aktiviert wird, unabhängig davon, was in der AIS-Bodenstations-Nachricht laut Bit-Status enthalten ist. Dadurch kann erreicht werden, dass bei einem ausgeschalteten AIS-Schiffstransceiver und bei Feststellung eines Missbrauchversuches das Aussenden der entsprechenden AIS-Funksignale aktiviert wird, um so das Schiff orten und überwachen zu können. Denkbar ist hierbei auch, dass eine entsprechende Alarmnachricht an eine Bodenstation und/oder an einen Satelliten ausgesendet wird.

In einer weiteren vorteilhaften Ausgestaltung ist die Steuereinheit eingerichtet, die Validierung der AIS-Bodenstation weiter in Abhängigkeit von der Schiffsposition des empfangenen Schiffes und den in der Nachricht enthaltenen Daten durchzuführen. Dadurch kann eine Plausibilitätsprüfung erreicht werden, ob es überhaupt möglich ist, an der Schiffsposition eine entsprechende Bodenstation empfangen zu können.

Darüber hinaus wird die Aufgabe auch mit dem in Patentanspruch 7 genannten Verfahren erfindungsgemäß gelöst. Vorteilhafte Ausgestaltungen des Verfahrens finden sich in den entsprechenden Unteransprüchen.

Die Erfindung wird anhand der beigefügten Figur beispielhaft näher erläutert. Es zeigt:

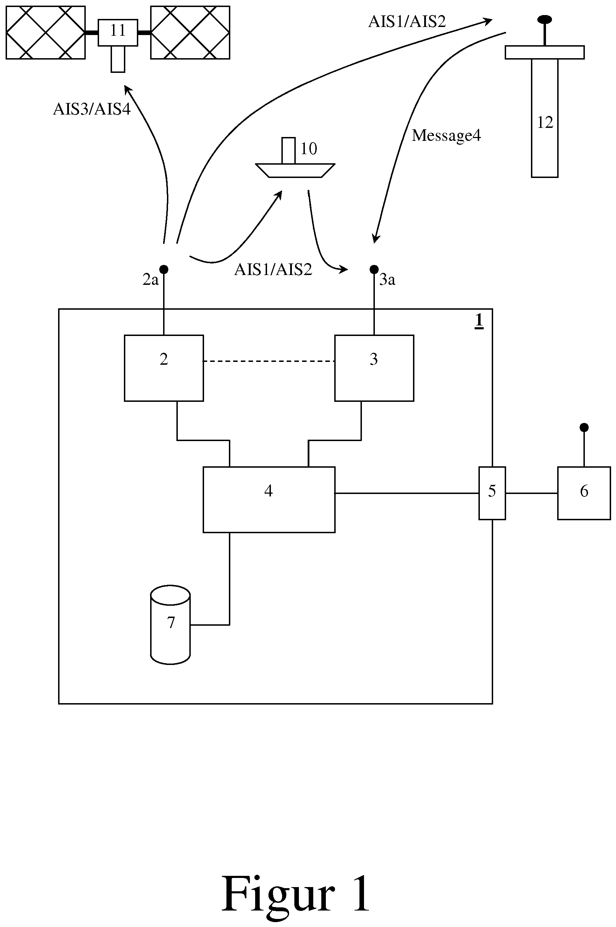

- Figur 1 -: schematische Darstellung eines erfindungsgemäßen AIS-Schiffstransceivers.

Figur 1 zeigt den erfindungsgemäßen AIS-Schiffstransceiver 1 in einer schematischen Darstellung. Der Schiffstransceiver 1 ist dabei zum Einbau auf einem Schiff vorgesehen und eingerichtet, an Bord eines Schiffs verbaut zu werden. Der Schiffstransceiver 1 weist eine AIS-Funksendeeinheit 2 auf, mit der über eine Antenne 2a AIS-Funksignale ausgesendet werden können. Des Weiteren weist der AIS-Schiffstransceiver 1 eine AIS-Funkempfangseinheit 3 auf, die über eine Antenne 3a entsprechende AIS-Funksignale empfangen kann.

Der AIS-Schiffstransceiver 1 weist des Weiteren eine mit der AIS-Funksendeeinheit 2 und der AIS-Funkempfangseinheit 3 verbundene Steuereinheit 4 auf, um das Aussenden der AIS-Funksignale des zweiten AIS-Funksignaltyps entsprechend zu deaktivieren oder zu aktivieren. Im Ausführungsbeispiel der Figur 1 ist die Steuereinheit 4 über eine Schnittstelle 5 des AIS-Schiffstransceivers 1 mit einer Positionsermittlungseinheit 6 verbunden, die mit Hilfe eines GPS-Empfängers die aktuelle Schiffsposition des Schiffes auf dem der AIS-Schiffstransceivers 1 verbaut ist, ermittelt und der Steuereinheit 4 zur Verfügung stellt.

Denkbar ist aber auch, dass die Funktionalität der Positionsermittlung des Schiffes integraler Bestandteil des AIS-Schiffstransceivers 1 ist.

Des Weiteren ist die Steuereinheit 4 mit einer Datenbank 7 signaltechnisch verbunden, in der Daten bezüglich gültiger AIS-Bodenstationen hinterlegt sind. Auf diese Daten in der Datenbank 7 kann die Steuereinheit 4 entsprechend zugreifen und die Daten abfragen.

Die AIS-Funksendeeinheit 2 ist nun so ausgebildet, dass sie gemäß dem AIS-Standard AIS-Funksignale AIS1/AIS2 des ersten AIS-Funksignaltyps TER-AIS (terrestrisches AIS) aussenden kann, wobei diese AIS-Funksignale AIS1/AIS2 Schiffsdaten des Schiffes, auf dem der AIS-Schiffstransceiver 1 verbaut ist, enthalten.

Diese AIS-Funksignale AIS1/AIS2 werden im Broadcast-Verfahren ausgesendet und von in Empfangsreichweite befindlichen Schiffen empfangen, so dass die benachbarten Schiffe 10 Schiffsdaten des auszusendenden Schiffes erhalten können.

Befindet sich auf dem benachbarten Schiff 10 ein baugleicher oder ähnlicher AIS-Schiffstransceiver 1, so sendet das benachbarte Schiff diesem wiederum seine Schiffsdaten mit Hilfe von AIS-Funksignalen AIS1/AIS2 des ersten AIS-Funksignaltyps TER-AIS im Broadcast-Verfahren aus, die dann wiederum von dem AIS-Schiffstransceiver 1 mit Hilfe der Empfangseinheit 3 empfangen werden können.

Gemäß dem neueren AIS-Standard ist die AIS-Funksendeeinheit 2 des Weiteren ausgebildet, die AIS-Funksignale AIS3/AIS4 eines zweiten AIS-Funksignaltyps SAT-AIS auszusenden, die dann von einem Satelliten 11 empfangen werden können. Gemäß dem AIS-Standard dienen die Funksignale des zweiten AIS-Funksignaltyps SAT-AIS ausschließlich dazu, ein satellitengestütztes Überwachungssystem insbesondere auf hoher See zu etablieren, um so den Schiffsverkehr lückenlos zu überwachen.

Des Weiteren ist die AIS-Funkempfangseinheit 3 ausgebildet, Funksignale einer AIS-Bodenstation 12 zu empfangen, wodurch der AIS-Schiffstransceiver feststellen kann, dass er sich im Empfangsbereich einer AIS-Bodenstation befindet, wenn er beispielsweise eine im Broadcast-Verfahren ausgesendete AIS-Bodenstations-Nachricht (Message 4) empfangen hat. In diesem Fall ist der AIS-Schiffstransceiver 1 ausgebildet, das Aussenden der AIS-Funksignale AIS3/AIS4 des zweiten AIS-Funksignaltyps zu deaktivieren, da im Kommunikationsbereich der AIS-Bodenstation 12 die AIS-Funksignale des ersten AIS-Funksignaltyps zur Überwachung des Schiffsverkehrs empfangen und verwendet werden können. Um Signalkollisionen im Empfangsbereich der Satellitenkommunikation zu vermeiden, wird dieser Kommunikationsweg zeitweise deaktiviert, so wie dies der AIS-Standard vorsieht.

Hierfür sendet die Bodenstation 12 eine entsprechende AIS-Bodenstations-Nachricht (Message 4) aus, in der ein entsprechendes Bit gesetzt ist, das die Deaktivierung des Aussendens der AIS-Funksignale AIS3/AIS4 des zweiten AIS-Funksignaltyps anzeigt.

Um nun Missbrauch dieser automatischen Deaktivierungsfunktion zu verhindern, ist die Steuereinheit 4 derart eingerichtet, dass sie in Abhängigkeit von den in der Datenbank 7 hinterlegten Daten sowie der in der Message 4 enthaltenen Daten die AIS-Bodenstation 12 validiert, um so festzustellen, ob es sich um eine gültigen Bodenstation handelt und so der satellitengestützte Überwachungskommunikationskanal ausgeschaltet werden kann. Handelt es sich hingegen nicht um eine gültige Bodenstation, so verbleibt das Aussenden der AIS-Funksignale AIS3/AIS4 unverändert.

## Patentansprüche

1. AIS-Schiffstransceiver (1), der zum Einbau auf einem Schiff vorgesehen ist, um AIS-Funksignale senden und empfangen zu können, mit einer AIS-Funksendeeinheit (2), die zum Senden von AIS-Funksignalen (AIS1/AIS2, AIS3/AIS4) ausgebildet ist, und mit einer AIS-Funkempfangseinheit (3), die zum Empfang von AIS-Funksignalen (AIS1/AIS2, Message4), die von benachbarten Schiffen (10) und/oder in Reichweite befindlichen AIS-Bodenstationen (12) ausgesendet werden, ausgebildet ist, wobei der AIS-Schiffstransceiver (1) eingerichtet ist,
- nach Empfang einer von einer AIS-Bodenstation (12) ausgesendeten AIS-Bodenstations-Nachricht (Message4) in Abhängigkeit von der empfangenen AIS-Bodenstations-Nachricht (Message4) das Aussenden zumindest eines Teils der AIS-Funksignale (AIS3/AIS4) durch die AIS-Funksendeeinheit (2) zu deaktivieren und/oder
- nach Empfang einer von einer AIS-Bodenstation (12) ausgesendeten AIS-Bodenstations-Nachricht (Message4) in Abhängigkeit von der empfangenen AIS-Bodenstations-Nachricht (Message4) das Aussenden zumindest eines Teils der AIS-Funksignale (AIS3/AIS4) durch die AIS-Funksendeeinheit (2) zu aktivieren
**dadurch gekennzeichnet, dass** der AIS-Schiffstransceiver (1) eine Steuereinheit (4) aufweist, die mit einer Datenbank (7) verbunden ist, in der Daten bezüglich gültiger AIS-Bodenstationen hinterlegt sind, wobei die Steuereinheit (4) eingerichtet ist,
- nach Empfang der AIS-Bodenstations-Nachricht (Message4) die sendende AIS-Bodenstation (12) in Abhängigkeit von den in der AIS-Bodenstations-Nachricht (Message4) enthaltenen Daten und den in der Datenbank (7) zu dieser AIS-Bodenstation (12) hinterlegten Daten zu validieren und
wobei die Steuereinheit (4) weiterhin eingerichtet ist,
- das Aussenden des zumindest einen Teils der AIS-Funksignale (AIS3/AIS4) in Abhängigkeit von der Validierung der sendenden AIS-Bodenstation (12) zu deaktivieren, wobei bei fehlgeschlagener Validierung der sendenden AIS-Bodenstation das Aussenden des zumindest einen Teils der AIS-Funksignale nicht deaktiviert wird, und/oder
- das Aussenden des zumindest einen Teils der AIS-Funksignale (AIS3/AIS4) in Abhängigkeit von der Validierung der sendenden AIS-Bodenstation (12) zu aktivieren, wobei bei fehlgeschlagener Validierung der sendenden AIS-Bodenstation das Aussenden des zumindest einen Teils der AIS-Funksignale nicht aktiviert wird.

2. AIS-Schiffstransceiver (1) nach Anspruch 1, **dadurch gekennzeichnet, dass** die AIS- Funkempfangseinheit (3) zum Empfang einer Base-Station-Report-Nachricht (Message4) als AIS-Bodenstations-Nachricht eingerichtet ist,
- wobei der AIS-Schiffstransceiver (1) zum Ermitteln des Bitstatus (Transmission control for longrange broadcast message) bezüglich der Deaktivierung des Aussendens des zumindest einen Teils der AIS-Funksignale (AIS3/AIS4) in der empfangenen Base-Station-Report-Nachricht (Message4) und zum Deaktivieren des Aussendens des zumindest einen Teils der AIS-Funksignale (AIS3/AIS4) in Abhängigkeit von dem ermittelten Bitstatus ausgebildet ist, und/oder
- wobei der AIS-Schiffstransceiver (1) zum Ermitteln des Bitstatus (Transmission control for longrange boradcast message) bezüglich der Aktivierung des Aussendens des zumindest einen Teils der AIS-Funksignale (AIS3/AIS4) in der empfangenen Base-Station-Report Nachricht (Message4) und zum Aktivieren des Aussendens des zumindest einen Teils der AIS-Funksignale (AIS3/AIS4) in Abhängigkeit von dem ermittelten Bitstatus ausgebildet ist.

3. AIS-Schiffstransceiver (1) nach Anspruch 1 oder 2, **dadurch gekennzeichnet, dass** die AIS-Funksendeeinheit (2) zum Senden von AIS-Funksignalen (AIS1/AIS2) eines ersten AIS-Funksignaltyps (TER-AIS), die zum Austausch von Schiffsdaten der Schiffe untereinander vorgesehen sind, und zum Senden von AIS-Funksignalen (AIS3/AIS4) eines zweiten AIS-Funksignaltyps (SAT-AIS), die zum Empfang durch einen Satelliten und zum Übertragen der in den AIS-Funksignalen (AIS3/AIS4) des zweiten AIS-Funksignaltyps (SAT-AIS) enthaltenen Schiffsverkehrsdaten an eine Bodenstation mittels des Satelliten vorgesehen sind, ausgebildet ist, wobei der AIS-Schiffstransceiver eingerichtet ist,
- nach Empfang der AIS-Bodenstations-Nachricht in Abhängigkeit von der empfangenen AIS-Bodenstations-Nachricht das Aussenden der AIS-Funksignale (AIS3/AIS4) des zweiten AIS-Funksignaltyps (SAT-AIS) durch die AIS-Funksendeeinheit zu deaktivieren und/oder
- nach Empfang der AIS-Bodenstations-Nachricht in Abhängigkeit von der empfangenen AIS-Bodenstations-Nachricht das Aussenden der AIS-Funksignale (AIS3/AIS4) des zweiten AIS-Funksignaltyps (SAT-AIS) durch die AIS-Funksendeeinheit zu aktivieren.

4. AIS-Schiffstransceiver (1) nach einem der vorhergehenden Ansprüche, **dadurch gekennzeichnet, dass** die Steuereinheit (4) eingerichtet ist,
- bei erfolgreicher Validierung der sendenden AIS-Bodenstation das Aussenden des zumindest einen Teils der AIS-Funksignale zu deaktivieren und/oder
- bei erfolgreicher Validierung der sendenden AIS-Bodenstation das Aussenden des zumindest einen Teils der AIS-Funksignale zu aktivieren.

5. AIS-Schiffstransceiver (1) nach einem der vorhergehenden Ansprüche, **dadurch gekennzeichnet, dass** die Steuereinheit (4) eingerichtet ist, bei fehlgeschlagener Validierung der sendenden AIS-Bodenstation das Aussenden des zumindest einen Teils der AIS-Funksignale zu aktivieren und eine Alarmnachricht an eine Bodenstation und/oder an einen Satelliten auszusenden.

6. AIS-Schiffstransceiver (1) nach einem der vorhergehenden Ansprüche, **dadurch gekennzeichnet, dass** die Steuereinheit eingerichtet ist, die sendende AIS-Bodenstation weiterhin in Abhängigkeit von der Schiffsposition des empfangenden Schiffes und den in der AIS-Bodenstations-Nachricht enthaltenen Daten zu validieren.

7. Verfahren zum Senden und Empfangen von AIS-Funksignalen durch einen AIS-Schiffstransceiver, mit den Schritten:
- Senden von Schiffsdaten enthaltenen AIS-Funksignalen durch eine AIS-Funksendeeinheit, und
- Empfangen von AIS-Funksendeeinheiten, die von benachbarten Schiffen und/oder in Reichweite befindlichen AIS-Bodenstationen ausgesendet wurden, durch eine AIS-Funkempfangseinheit,
**gekennzeichnet durch**
- Empfangen einer von einer AIS-Bodenstation ausgesendeten AIS-Bodenstations-Nachricht durch die AIS-Funkempfangseinheit,
- Validieren der sendenden AIS-Bodenstation in Abhängigkeit von den in der AIS-Bodenstations-Nachricht enthaltenen Daten und von in einer Datenbank hinterlegten Daten bezüglich der sendenden AIS-Bodenstation durch eine Steuereinheit, und
- Deaktivieren oder Aktivieren des Sendens zumindest eines Teils der AIS-Funksignale in Abhängigkeit von der Validierung der sendenden AIS-Bodenstation durch die Steuereinheit, bei fehlgeschlagener Validierung der sendenden AIS-Bodenstation das Aussenden des zumindest einen Teils der AIS-Funksignale durch die Steuereinheit nicht deaktiviert oder aktiviert wird.

8. Verfahren nach Anspruch 7, **dadurch gekennzeichnet, dass** eine Base-Station-Report-Nachricht (Message 4) als AIS-Bodenstations-Nachricht durch die AIS-Funkempfangseinheit empfangen, ein Bitstatus (Transmission control for longrange broadcast message) bezüglich der Aktivierung oder Deaktivierung des Aussendens des zumindest einen Teils der AIS-Funksignale in der empfangenen Base-Station-Report-Nachricht ermittelt und das Senden des zumindest einen Teils der AIS-Funksignale in Abhängigkeit von dem ermittelten Bitstatus durch den AIS-Schiffstransceiver deaktiviert oder aktiviert wird.

9. Verfahren nach Anspruch 7 oder 8, **dadurch gekennzeichnet, dass** AIS-Funksignale (AIS1/AIS2) eines ersten AIS-Funksignaltyps (TER-AIS), die zum Austausch von Schiffsdaten der Schiffe untereinander vorgesehen sind, und AIS-Funksignale (AIS3/AIS4) eines zweiten AIS-Funksignaltyps (SAT-AIS), die zum Empfang durch einen Satelliten und zum Übertragen der in den AIS-Funksignalen (AIS3/AIS4) des zweiten AIS-Funksignaltyps (SAT-AIS) enthaltenen Schiffsverkehrsdaten an eine Bodenstation mittels des Satelliten vorgesehen sind, durch die AIS-Funksendeeinheit ausgesendet werden, wobei nach Empfang der AIS-Bodenstations-Nachricht in Abhängigkeit von der empfangenen AIS-Bodenstations-Nachricht das Aussenden der AIS-Funksignale (AIS3/AIS4) des zweiten AIS-Funksignaltyps (SAT-AIS) durch die Steuereinheit deaktiviert oder aktiviert wird.

10. Verfahren nach einem Ansprüche 7 bis 9, **dadurch gekennzeichnet, dass** bei erfolgreicher Validierung der sendenden AIS-Bodenstation das Aussenden des zumindest einen Teils der AIS-Funksignale durch die Steuereinheit deaktiviert oder aktiviert wird.

11. Verfahren nach einem der Ansprüche 7 bis 10, **dadurch gekennzeichnet, dass** bei fehlgeschlagener Validierung der sendenden AIS-Bodenstation das Aussenden des zumindest einen Teils der AIS-Funksignale durch die Steuereinheit aktiviert und eine Alarmnachricht an eine Bodenstation und/oder an einen Satelliten durch die Steuereinheit ausgesendet wird.

12. Verfahren nach einem der Ansprüche 7 bis 11, **dadurch gekennzeichnet, dass** die sendende AIS-Bodenstation weiterhin in Abhängigkeit von der Schiffsposition des empfangenden Schiffes und den in der AIS-Bodenstations-Nachricht enthaltenen Daten durch die Steuereinheit validiert wird.

## Claims

1. AIS ship transceiver (1) which is provided for installation in a ship in order to be able to transmit and receive AIS radio signals, comprising an AIS radio transmitting unit (2), which is designed for transmitting AIS radio signals (AIS1/AIS2, AIS3/AIS4), and comprising an AIS radio receiving unit (3) which is designed for receiving AIS radio signals (AIS1/AIS2, message 4) which are emitted by adjacent ships (10) and/or AIS base stations (12), located within range, the AIS ship transceiver (1) being configured
- after reception of an AIS base station message (message 4) emitted by an AIS base station (12), in dependence on the received AIS base station message (message 4), to deactivate the emitting of at least a part of the AIS radio signals (AIS3/AIS4) by the AIS radio transmitting unit (2)
and/or
- after reception of an AIS base station message (message 4) emitted by an AIS base station (12), in dependence on the received AIS base station message (message 4), to activate the emitting of at least a part of the AIS radio signals (AIS3/AIS4) by the AIS radio transmitting unit (2)
**characterized in that** the AIS ship transceiver (1) has a control unit (4) which is connected to a database (7) in which data with respect to valid AIS base stations are stored, the control unit (4) being configured,
- after reception of the AIS base station message (message 4), to validate the transmitting AIS base station (12) in dependence on the data contained in the AIS base station message (message 4) and the data stored in the database (7) for this AIS base station (12), and the control unit (4) being furthermore configured,
- for deactivating the emission of at least a part of the AIS radio signals (AIS3/AIS4) in dependence on the validation of the transmitting AIS base station (12), whereby in the case of a failed validation of the transmitting AIS base station, the emitting of the at least one part of the AIS radio signals is not deactivated, and/or
- for activating the emission of at least a part of the AIS radio signals (AIS3/AIS4) in dependence on the validation of the transmitting AIS base station (12), whereby in the case of a failed validation of the transmitting AIS base station, the emitting of the at least one part of the AIS radio signals is not activated.

2. AIS ship transceiver (1) according to Claim 1, **characterized in that** the AIS radio receiving unit (3) is configured for receiving a base station report message (message 4) as AIS base station message,
- whereby the AIS ship transceiver (1) is designed for determining the bit status (transmission control for long range broadcast message) with respect to the deactivation of the emitting of the at least one part of the AIS radio signals (AIS3/AIS4) in the received base station report message (message 4) and for deactivating the emitting of the at least on e part of the AIS radio signals (AIS3/AIS4) in dependence on the bit status determined, and/or
- whereby the AIS ship transceiver (1) is designed for determining the bit status (transmission control for long range broadcast message) with respect to the activation of the emitting of the at least one part of the AIS radio signals (AIS3/AIS4) in the received base station report message (message 4) and for activating the emitting of the at least one part of the AIS radio signals (AIS3/AIS4) in dependence on the bit status determined.

3. AIS ship transceiver (1) according to Claim 1 or 2, **characterized in that** the AIS radio transmitting unit (2) is designed for transmitting AIS radio signals (AIS1/AIS2) of a first AIS radio signal type (TER-AIS), which are provided for the exchange of ship data of the ships among one another, and for transmitting AIS radio signals (AIS3/AIS4) of a second AIS radio signal type (SAT-AIS), which are provided for reception by a satellite and for transmitting the ship traffic data, contained in the AIS radio signals (AIS3/AIS4) of the second AIS radio signal type (SAT-AIS), to a base station by means of the satellite, the AIS ship transceiver being configured,
- for deactivating the emitting of the AIS radio signals (AIS3/AIS4) of the second AIS radio signal type (SAT-AIS) by the AIS radio transmitting unit, after reception of the AIS base station message, in dependence on the received AIS base station message.
- for activating the emitting of the AIS radio signals (AIS3/AIS4) of the second AIS radio signal type (SAT-AIS) by the AIS radio transmitting unit, after reception of the AIS base station message, in dependence on the received AIS base station message.

4. AIS ship transceiver (1) according to one of the preceding claims, **characterized in that** the control unit (4) is configured,
- to deactivate the emitting of the at least one part of the AIS radio signals in the case of a successful validation of the transmitting AIS base station, and/or
- to activate the emitting of the at least one part of the AIS radio signals in the case of a successful validation of the transmitting AIS base station.

5. AIS ship transceiver (1) according to one of the preceding claims, **characterized in that** the control unit (4) is configured to activate the emitting of the at least one part of the AIS radio signals in the case of a failed validation of the transmitting AIS base station and to emit an alarm message to a base station and/or to a satellite.

6. AIS ship transceiver (1) according to one of the preceding claims, **characterized in that** the control unit is configured to continue to validate the transmitting AIS base station in dependence on the ship position of the receiving ship and the data contained in the AIS base station message.

7. Method for transmitting and receiving AIS radio signals by an AIS ship transceiver, comprising the steps:
- transmitting AIS radio signals containing ship data by an AIS radio transmission unit, and
- receiving AIS radio signals which have been emitted by adjacent ships and/or AIS base stations, located within range, by an AIS radio receiving unit,
**characterized by**
- receiving an AIS base station message emitted by an AIS base station by the AIS radio receiving unit,
- validating the transmitting AIS base station in dependence on the data contained in the AIS base station message and on data stored in a database with respect to the transmitting AIS base station by a control unit, and
- deactivating or activating the transmitting of at least a part of the AIS radio signals in dependence on the validation of the transmitting AIS base station by the control unit, in the case of a failed validation of the transmitting AIS base station, the emitting of the at least one part of the AIS radio signals is not deactivated or activated by the control unit.

8. Method according to Claim 7, **characterized in that** a base station report message (message 4) is received by the AIS radio receiving unit, a bit status (transmission control for long range broadcast message) with respect to the activation or deactivation of the emitting of the at least one part of the AIS radio signals in the received AIS base station report message is determined and the transmitting of the at least one part of the AIS radio signals is deactivated or activated in dependence on the determined bit status by the AIS ship transceiver.

9. Method according to Claim 7 or 8, **characterized in that** AIS radio signals (AIS1/AIS2) of a first AIS radio signal type (TER-AIS), which are provided for the exchange of ship data of the ships among one another, and AIS radio signals (AIS3/AIS4) of a second AIS radio signal type (SAT-AIS), which are provided for reception by a satellite and for transmitting the ship traffic data, contained in the AIS radio signals (AIS3/AIS4) of the second AIS radio signal type (SAT-AIS), to a base station by means of the satellite are emitted by the AIS radio transmission unit, the emitting of the AIS radio signals (AIS3/AIS4) of the second AIS radio signal type (SAT-AIS) being deactivated or activated by the control unit after reception of the AIS base station message, in dependence on the received AIS base station message.

10. Method according to one of Claims 7 to 9, **characterized in that** in the case of a successful validation of the transmitting AIS base station, the emitting of the at least one part of the AIS radio signals is deactivated or activated by the control unit.

11. Method according to one of Claims 7 to 10, **characterized in that** in the case of a failed validation of the transmitting AIS base station, the emitting of the at least one part of the AIS radio signals is activated by the control unit and an alarm message is emitted to a base station and/or to a satellite by the control unit.

12. Method according to one of Claims 7 to 11, **characterized in that** the transmitting AIS base station is still validated by the control unit in dependence on the ship position of the receiving ship and the data contained in the AIS base station message.

## Revendications

1. Emetteur-récepteur (1) de navire pour système d'identification automatique (« Automatic Identification System » - AIS), prévu pour être monté sur un navire pour pouvoir envoyer et recevoir des signaux radio AIS, présentant une unité d'émission radio AIS (2) configurée pour émettre des signaux radio AIS (AIS1/AIS2, AIS3/AIS4) et une unité de réception radio AIS (3) configurée pour recevoir des signaux radio AIS (AIS1/AIS2, Message4) émis par des navires (10) voisins et/ou par des stations terrestres AIS (12) situées dans leur portée, l'émetteur-récepteur AIS (1) de navire étant conçu pour
- après réception d'un message de station terrestre AIS (Message4) émis par une station terrestre AIS (12), désactiver l'émission d'au moins une partie des signaux radio AIS (AIS3/AIS4) par l'unité d'émission radio AIS (2) en fonction du message de station terrestre AIS (Message4) qui a été reçu et/ou
- après réception d'un message de station terrestre AIS (Message4) envoyé par une station terrestre AIS (12), activer l'émission d'au moins une partie des signaux radio AIS (AIS3/AIS4) par l'unité d'émission radio AIS (2) en fonction du message de station terrestre AIS (Message4) qui a été reçu,
**caractérisé en ce que**
l'émetteur-récepteur AIS (1) de navire présente une unité de commande (4) raccordée à une base de données (7) dans laquelle des données concernant les stations terrestres AIS valides sont conservées, l'unité de commande (4) étant conçue pour
- après réception d'un message de station terrestre AIS (Message4), valider la station terrestre AIS (12) émettrice en fonction des données contenues dans le message de station terrestre AIS (Message4) et des données conservées dans la base de données (7) concernant cette station terrestre AIS (12),
l'unité de commande (4) étant en outre conçue pour
- désactiver la ou les parties des signaux radio AIS (AIS3/AIS4) en fonction de la validation de la station terrestre AIS (12) émettrice, la validation entachée de défauts de la station terrestre AIS émettrice n'entraînant pas la désactivation de l'émission de la ou des parties des signaux radio AIS et/ou
- activer l'émission de la ou des parties des signaux radio AIS (AIS3/AIS4) en fonction de la validation de la station terrestre AIS (12) émettrice, la validation entachée de défauts de la station terrestre AIS émettrice n'entraînant pas l'activation de pas l'émission de la ou des parties des signaux radio AIS.

2. Emetteur-récepteur AIS (1) de navire selon la revendication 1, **caractérisé en ce que** l'unité de réception radio AIS (3) est conçue pour recevoir un message de rapport de la station de base (Message4) comme message de station terrestre AIS,
- l'émetteur-récepteur AIS (1) de navire étant configuré pour déterminer le statut de bit (contrôle de transmission de messages diffusés à grande portée) concernant la désactivation de l'émission de la ou des parties des signaux radio AIS (AIS3/AIS4) dans le message de rapport de la station de base (Message4) et pour désactiver l'émission de la ou des parties des signaux radio AIS (AIS3/AIS4) en fonction du statut de bit qui a été déterminé et/ou
- l'émetteur-récepteur AIS (1) de navire étant configuré pour déterminer le statut de bit (contrôle de transmission de messages diffusés à longue portée) concernant l'activation de l'émission de la ou des parties des signaux radio AIS (AIS3/AIS4) dans le message de rapport de la station de base (Message4) et pour activer l'émission de la ou des parties des signaux radio AIS (AIS3/AIS4) en fonction du statut de bit qui a été déterminé.

3. Emetteur-récepteur AIS (1) de navire selon la revendication 1 ou 2, **caractérisé en ce que** l'unité d'émission radio AIS (2) est configurée pour émettre des signaux radio AIS (AIS1/AIS2) d'un premier type (TER-AIS) de signaux radio AIS prévu pour l'échange mutuel de données de navire entre les navires et pour l'émission de signaux radio AIS (AIS3/AIS4) d'un deuxième type (SAT-AIS) de signaux radio AIS prévu pour la réception par un satellite et la transmission de données de trafic des navires que contiennent les signaux radio AIS (AIS3/AIS4) du deuxième type (SAT-AIS) de signaux radio AIS à une station terrestre au moyen du satellite, l'émetteur-récepteur AIS de navire étant conçu pour
- après réception du message de station terrestre AIS, en fonction du message de station terrestre AIS reçu, désactiver l'émission des signaux radio AIS (AIS3/AIS4) du deuxième type (SAT-AIS) de signaux radio AIS par l'unité d'émission radio AIS et/ou
- après réception du message de station terrestre AIS, en fonction du message de station terrestre AIS reçu, activer l'émission des signaux radio AIS (AIS3/AIS4) du deuxième type (SAT-AIS) de signaux radio AIS par l'unité d'émission radio AIS.

4. Emetteur-récepteur AIS (1) de navire selon l'une des revendications précédentes, **caractérisé en ce que** l'unité de commande (4) est conçue pour
- lorsque la validation de la station terrestre AIS émettrice a réussi, désactiver l'émission de la ou des parties des signaux radio AIS et/ou
- lorsque la validation de la station terrestre AIS émettrice a réussi, activer l'émission de la ou des parties des signaux radio AIS.

5. Emetteur-récepteur AIS (1) de navire selon l'une des revendications précédentes, **caractérisé en ce que** l'unité de commande (4) est conçue pour, lorsque la validation de la station terrestre AIS émettrice est entachée d'erreurs, activer l'émission de la ou des parties des signaux radio AIS et envoyer un message d'alarme à une station terrestre et/ou un satellite.

6. Emetteur-récepteur AIS (1) de navire selon l'une des revendications précédentes, **caractérisé en ce que** l'unité de commande est conçue pour valider la station terrestre AIS émettrice en fonction de la position du navire récepteur et des données que contient le message de station terrestre AIS.

7. Procédé d'émission et de réception de signaux radio AIS par un l'émetteur-récepteur AIS de navire, le procédé comportant les étapes qui consistent à :
- faire émettre par une unité d'émission radio AIS des signaux radio AIS contenant des données sur des navires et
- faire recevoir par une unité d'émission radio AIS des signaux radio AIS qui ont été émis par des navires voisins et/ou par des stations terrestres AIS situées à portée,
**caractérisé par** les étapes qui consistent à :
- faire recevoir par l'unité d'émission radio AIS un message de station terrestre AIS émis par une station terrestre AIS,
- faire valider par une unité de commande la station terrestre AIS émettrice en fonction des données que contient le message de station terrestre AIS et de données conservées dans une base de données concernant la station terrestre AIS émettrice et
- désactiver ou activer l'émission d'au moins une partie des signaux radio AIS en fonction de la validation de la station terrestre AIS émettrice par l'unité de commande et, en cas de validation entachée d'erreurs de la station terrestre AIS émettrice, ne pas désactiver ou activer l'émission de la ou des parties des signaux radio AIS par l'unité de commande.

8. Procédé selon la revendication 7, **caractérisé en ce qu'**un message de rapport de station de base (Message4) comme message de station terrestre AIS est reçu par l'unité de réception radio AIS, un statut de bit (contrôle de transmission de messages diffusés à longue portée) concernant l'activation et la désactivation de l'émission de la ou des parties des signaux radio AIS est déterminé dans le message de rapport de station de base reçu et l'émission de la ou des parties des signaux radio AIS est activée ou désactivée en fonction du statut de bit qui a été déterminé par l'émetteur-récepteur AIS du navire.

9. Procédé selon la revendication 7 ou 8, **caractérisé en ce que** les signaux radio AIS (AIS1/AIS2) d'un premier type (TER-AIS) de signaux radio AIS prévus pour l'échange de données de navire entre les navires et les signaux radio AIS (AIS3/AIS4) d'un deuxième type (SAT-AIS) de signaux radio AIS prévus pour la réception par un satellite et pour le transfert des données de trafic de navire que contiennent les signaux radio AIS (AIS3/AIS4) du deuxième type (SAT-AIS) de signaux radio AIS à une station terrestre au moyen de satellites sont émis par l'unité d'émission radio AIS, tandis qu'après réception du message de station terrestre AIS, l'émission des signaux radio AIS (AIS3/AIS4) du deuxième type (SAT-AIS) de signaux radio AIS par l'unité de commande est activée ou désactivée en fonction du message de station terrestre AIS reçu.

10. Procédé selon l'une des revendications 7 à 9, **caractérisé en ce que** lorsque la validation de la station terrestre AIS émettrice est couronnée de succès, l'émission de la ou des parties des signaux radio AIS par l'unité de commande est activée ou désactivée.

11. Procédé selon l'une des revendications 7 à 10, **caractérisé en ce que** lorsque la validation de la station terrestre AIS émettrice est entachée d'erreurs, l'émission de la ou des parties des signaux radio AIS par l'unité de commande est activée et un message d'alarme est envoyé par l'unité de commande à une station terrestre et/ou à un satellite.

12. Procédé selon l'une des revendications 7 à 11, **caractérisé en ce que** la station terrestre AIS émettrice est en outre validée par l'unité de commande en fonction de la position du navire récepteur et des données que contient le message de station terrestre AIS.
